# EUROPEAN PATENT SPECIFICATION

(11) **EP 2 093 463 B1**
(45) Date of publication and mention of the grant of the patent: **07.09.2011**
(21) Application number: 09002348.2
(22) Date of filing: 19.02.2009
(51) Int. Cl.: F16H 63/18, F16H 63/30, F16H 3/089

(54) **Transmission**
Übertragung
Transmission

(30) Priority: 19.02.2008 JP 2008037369
(43) Date of publication of application: 26.08.2009
(73) Proprietor: Yamaha Hatsudoki Kabushiki Kaisha, Iwata-shi, Shizuoka 438-8501 (JP)
(72) Inventor: Kosugi, Makoto, Iwata-shi Shizuoka-ken 438-8501 (JP)
(74) Representative: Grünecker, Kinkeldey, Stockmair & Schwanhäusser Anwaltssozietät

(56) References cited:
- EP-A- 0 573 901
- EP-A1- 2 085 665
- WO-A-00/73679
- JP-A- 6 123 355
- US-A1- 2005 160 848

## Description

The present invention relates to a transmission, in particular an electronically controlled transmission, and in particular to a straddle type vehicle having the same.

The prior art document EP 0 573 901 A1 teaches a respective transmission having a main shaft with a plurality of first gears configured to rotate about a center of the main shaft and a drive shaft with a plurality of second gears configured to rotate about a center of the drive shaft to mesh with the plurality of first gears. Said prior art document discloses a transmission having five gear steps in combination with a neutral position, wherein a rotatable shift cam is provided with three grooves configured to select respective gears among the plurality of the first and second gears for torque transmission from the main shaft to the drive shaft. The respective control device is configured to control rotation of the shift cam, wherein a plurality of shift steps of the transmission is set in accordance with at least a shape of the plurality of grooves, and the neutral position of the transmission is set below the lowest step of the shift steps. Within said prior art document, the grooves along the rotatable shift cam are arranged on a restricted area of the same, so that a short distance between the lowest step and the fifth step, as well as between the intermediate steps, can be ensured.

EP 2 085 665 A1 constitutes prior art under Article 54(3) EPC and discloses a twin clutch transmission having dual-structured main shafts with a plurality of first gears configured to rotate about a center of the main shafts, a drive shaft a plurality of second gears configured to rotate about a center of the drive shaft to mesh with the plurality of first gears. A rotatable shift cam with a plurality of grooves configured to select gears among the plurality of first and second gears for torque transmission from the main shaft to the drive shaft. A plurality of shift steps according to a first to sixth speed of the transmission are set in accordance with at least a shape of the plurality of grooves, the shift steps according to a first to sixth speed are set by rotation angles of 60 degrees having even intervals for gear in/gear out operation on the entire circumference of the shift cam and a neutral position of the transmission is set below a lowest step according to the first speed of the shift steps and between said lowest step and a highest step according to the sixth speed of the shift steps.

The further prior art document WO 00/73679 A1 teaches some kind of gear box having first to sixth gear steps as well as a return drive position. The neutral position is arranged between said return drive position and the first gear step position.

Conventionally, a mechanism of a return-type transmission includes a transmission as disclosed in JP-A-Hei 6-123355. The return-type transmission disclosed therein is a manual transmission used in a motorcycle. As shown in FIG. 7, the return-type transmission disclosed in JP-A-Hei 6-123355 has a shift pattern in which a neutral position is disposed between a first speed position and a second speed position. Gear change is operated when a gear shift cam 5, which is rotated due to the shift operation by a driver of the motorcycle, sequentially changes its shift position by rotating in steps to the forward direction F and the reverse direction R. The six-speed return-type transmission disclosed in JP-A-Hei 6-123355 has a feature that a rotation angle θ1 of the gear shift cam 5 between the first speed position and the second speed position is larger than rotation angles θ2, θ3 ... θ6 between other shift positions, and the neutral position is provided on a position rotated by half of the rotation angle θ1 between the first speed position and the second speed position. This enables easy shift change to the neutral.

However, when the neutral position is provided between the first speed and the second speed, shifting from the first speed to the neutral or from the second speed to the neutral could occur during running of the vehicle. Moreover, in a case where a shift change from the first speed to the neutral is intended when the vehicle is stopped, shifting to the second speed by skipping over the neutral could occur, so that the shifting between the first speed and the second speed could occur. In a so-called AMT (Automated Manual Transmission) which is an electronically controlled transmission with the shift operation using an actuator instead of manual operation, these situations are undesirable as the shift operation is not directly executed by the driver of the motorcycle. This is because, in the AMT, a correct and smooth automatic control in shifting is desired rather than the driver's operation. The present invention is made in view of the above problems.

It is an object of the present invention to provide a transmission as indicated above, which allows high operation performance as well as reliable shifting to the neutral position.

According to the present invention, said objective is solved by a transmission having the features of independent claim 1. Preferred embodiments are laid down in the dependent claims.

Accordingly, it is provided a transmission, in particular electronically controlled transmission having a return-type shift pattern, the transmission comprising: a main shaft with a plurality of first gears configured to rotate about a center of the main shaft; a drive shaft with a plurality of second gears configured to rotate about a center of the drive shaft to mesh with the plurality of first gears; a rotatable shift cam with a plurality of grooves configured to select gears among the plurality of first and second gears for torque transmission from the main shaft to the drive shaft; and a control device configured to control rotation of the shift cam, wherein a plurality of shift steps of the transmission is set in accordance with at least a shape of the plurality of grooves, and a neutral position of the transmission is set below a lowest step of the shift steps.

According to the above, it is possible to provide a return-type electronically controlled transmission capable of shifting to neutral reliably.

Preferably, a rotation angle of the shift cam between the neutral position and the lowest step is different from that between any adjacent shift steps.

Further, preferably the shift cam has an axis parallel to any of the axes of the main shaft and the drive shaft.

According to a preferred embodiment, a plurality of shift forks is configured to move any of the plurality of first gears in axial direction of the main shaft and to move any of the plurality of second gears in axial direction of the drive shaft, and, preferably, a plurality of fork shafts is configured to support the plurality of shift forks.

Preferably, a shift actuator is configured to rotate the shift cam, and the control device is configured to control the shift actuator.

Yet further still, preferably the neutral position is set to a position rotated by 30 degrees from the lowest step of the shift steps.

According to another preferred embodiment, a stopper means is configured to prevent the shift cam from rotating between the neutral position and a highest step, of the shift steps.

Preferably, the stopper means comprises the shift cam, and, preferably, the stopper means is a stopper portion formed such that at least one portion between the neutral position and the highest step of the shift steps is discontinuous.

Further, preferably the stopper portion is a barrier that is configured to regulate moving of at least one of the plurality of shift forks on the shift cam.

Still further, preferably the stopper means comprises the control device being configured to execute prevention control for preventing the shift cam from rotating between the neutral position and the highest step of the shift steps.

Preferably, the transmission comprises a clutch and a clutch actuator configured to connect or disconnect the clutch, and, preferably, the prevention control by the stopper means comprises control of the clutch actuator.

Further, preferably the prevention control by the stopper means comprises control of the shift actuator.

There is further provided a straddle type vehicle comprising a transmission, in particular an electronically controlled transmission, according to one of the above embodiments.

In the following, the present invention is explained in greater detail by means of embodiments thereof in conjunction with the accompanying drawings, wherein:
- FIG. 1: is a left side view of a motorcycle according to an embodiment;
- FIG.2: is a drawing showing a configuration of a power unit according to the embodiment;
- FIG. 3A: is a front view of a feed device;
- FIG. 3B: is a front view of a part of the feed device;
- FIG. 3C: is a front view of a segment;
- FIGs. 4A and 4B: are drawings showing a neutral position of a shift pattern of a transmission according to the embodiment, in which FIG. 4A shows an entire gear selection mechanism and FIG. 4B shows cam grooves;
- FIGs. 5A and 5B: are drawings showing a first speed position of the shift pattern of the transmission according to the embodiment, in which FIG. 5A shows the entire gear selection mechanism and FIG. 5B shows the cam grooves;
- FIGs. 6A and 6B: are drawings showing a second speed position of the shift pattern of the transmission according to the embodiment, in which FIG. 6A shows the entire gear selection mechanism and FIG. 6B shows the cam grooves; and

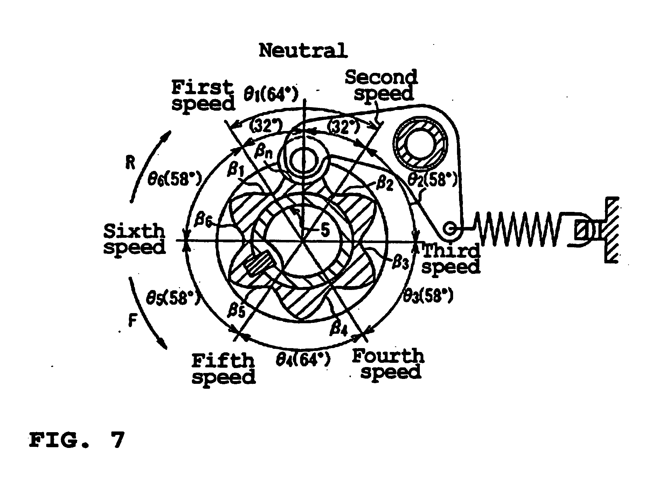

- FIG. 7: is a front view showing a part of a conventional transmission.

Among others, the following reference signs are used in the figures:
1: motorcycle
3: handlebar
10: power unit
12: engine
13: transmission (electronically controlled transmission)
14: clutch
16: shift actuator
18: clutch actuator
21: crankshaft
22: main shaft
23: drive shaft
24: gear selection mechanism
25: gear
26: gear
27: shift cam
27a: cam groove
27b: cam groove
27c: cam groove
28a: shift fork
28b: shift fork
28c: shift fork
38d: fork shaft
38m: fork shaft
50: feed device
51: shift shaft
52: shift arm
55: segment
90: stopper bearing
93: shift cam potentiometer
100: control device

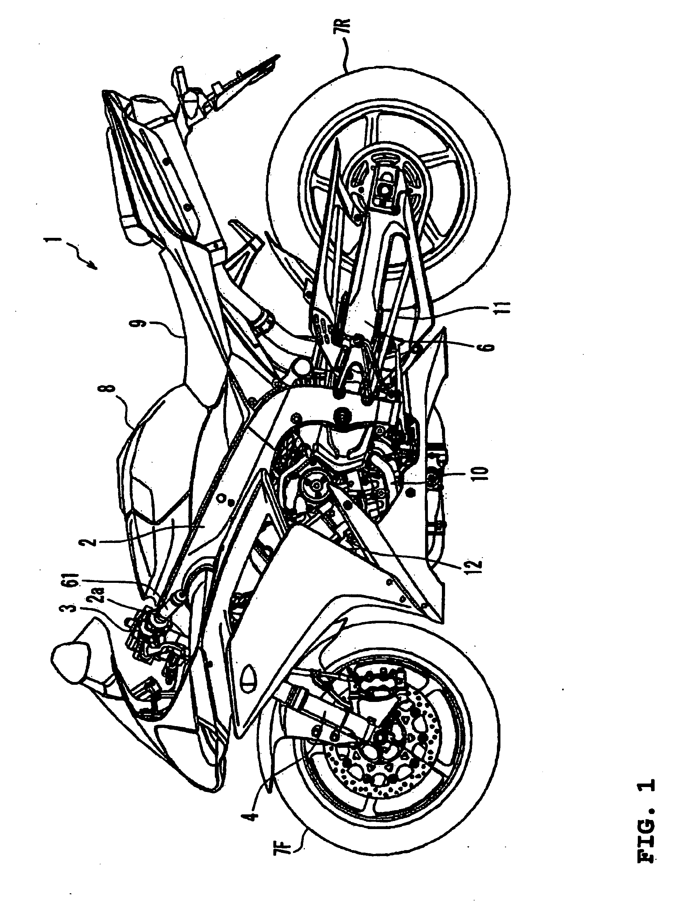

FIG. 1 is a left side view of a motorcycle 1 according to a first embodiment. With reference to FIG. 1, the outline configuration of the motorcycle 1 will be explained. In the following description, the directions such as the front, the rear, the left, and the right refer to directions viewed by a rider sitting on a seat 9. In particular, the technical teaching relates to a straddle-type vehicle having a body frame and a seat on which a rider can be seated straddling the body frame when being seated.

The motorcycle 1 includes a body frame 2. The body frame 2 has a head pipe 2a. A handlebar 3 is mounted on an upper end of the head pipe 2a, and a front wheel 7F is mounted to a lower end of the head pipe 2a through front forks 4 in a freely rotatable manner.

A swing arm 6 is swingably attached to a rear end of the body frame 2. A rear wheel 7R is mounted for rotation to the rear end of the swing arm 6.

The reference numeral 8 denotes a fuel tank. The seat 9 is provided at the rear side of the fuel tank 8.

A power unit 10 including an engine 12 as a driving source is suspended from the body frame 2. The power unit 10 is connected to the rear wheel 7R through a power transmission means 11 such as a chain, a belt, and a drive shaft. This allows the power transmission means 11 to transmit driving force to the rear wheel 7R, the driving force being generated in the power unit 10 by the engine 12.

In this embodiment, a clutch 14 is a multi-plate friction clutch and includes a cylindrical clutch housing 31, a cylindrical clutch boss 32, a plurality of friction plates 33 and clutch plates 34 serving as friction plates, and a pressure plate 35. Moreover, the clutch 14 includes a gear 29 to mesh with a gear 21 a formed on a crankshaft 21 of the engine 12. Additionally, the clutch 14 is an example to be used in this embodiment, and not limited to a multi-plate clutch. For example, the clutch 14 may be an automatic centrifuge clutch using a centrifuge weight.

The clutch housing 31 is formed in the shape of a cylinder and mounted to a main shaft 22 in a relatively rotatable manner. On an inner peripheral surface of the clutch housing 31, a plurality of grooves extending in the axial direction of the main shaft 22 are formed.

Each friction plate 33 is formed in the shape of a thin-plate ring. A plurality of teeth are formed on the outer periphery of each friction plate 33. Engagement between the plural teeth formed on the outer periphery of the friction plate 33 and the plural grooves formed on the inner peripheral surface of the clutch housing 31 enables each friction plate 33 to be mounted to the clutch housing 31 in a relatively unrotatable manner. Additionally, each friction plate 33 is mounted in a slidable manner in the axial direction of the main shaft 22 with respect to the clutch housing 31.

The clutch boss 32 is formed in the shape of a cylinder and disposed at inner side in the radial direction of the main shaft 22 compared to the clutch housing 31. Moreover, the clutch boss 32 is mounted to the main shaft 22 in a relatively unrotatable manner. On an outer peripheral surface of the clutch boss 32, a plurality of grooves extending in the axial direction of the main shaft 22 are formed.

Each clutch plate 34 is formed in the shape of a thin-plate ring. A plurality of teeth are formed on the inner periphery of each clutch plate 34. Engagement between the plural teeth formed on the inner periphery of the clutch plate 34 and the plural grooves formed on the outer peripheral surface of the clutch boss 32 allows each clutch plate 34 to be mounted to the clutch boss 32 in a relatively unrotatable manner. Additionally, each clutch plate 34 is mounted in a slidable manner in the axial direction of the main shaft 22 with respect to the clutch boss 32.

Each friction plate 33 is mounted to the clutch housing 31 such that its plate surface is substantially perpendicular to the axial direction of the main shaft 22. Each clutch plate 34 is mounted to the clutch boss 32 such that its plate surface is substantially perpendicular to the axial direction of the main shaft 22. Each friction plate 33 and each clutch plate 34 are alternately disposed in the axial direction of the main shaft 22.

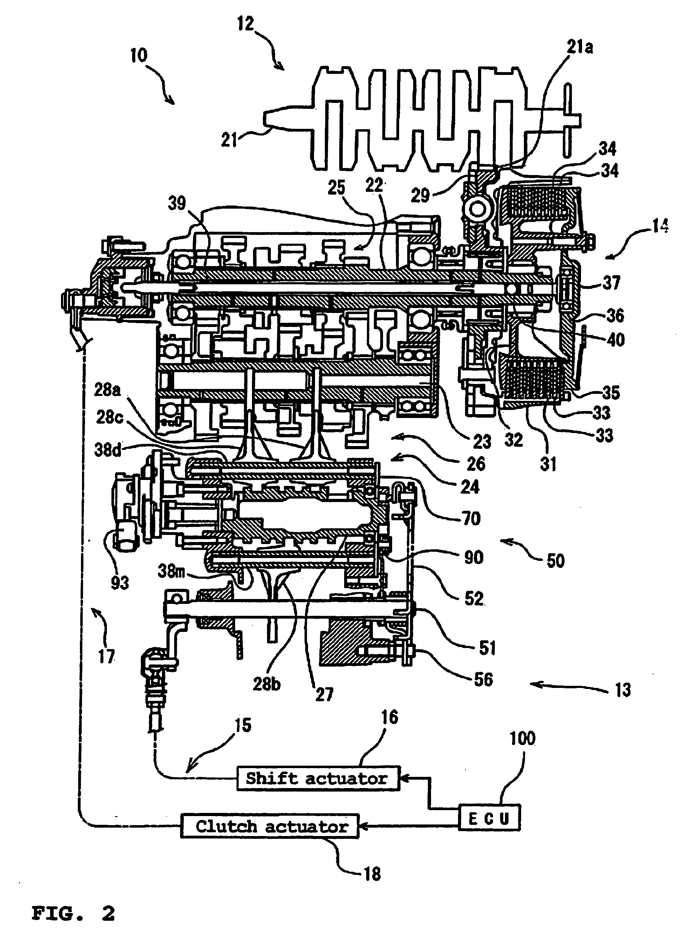

The pressure plate 35 is formed substantially in the shape of a disc and mounted in a slidable manner in the axial direction of the main shaft 22 with respect to the clutch boss 32. The pressure plate 35 is mounted in a freely rotatable manner to one end of a push rod 37 (the right side in FIG. 2), which is disposed in the cylindrical main shaft 22, through a bearing 36 such as a ball bearing.

In the cylindrical main shaft 22, a spherical ball 40 adjacent to the other end of the push rod 37 (the left end) is provided. On the left side of the ball 40, a push rod 39 adjacent to the ball 40 is provided.

One end of the push rod 39 (the left end) protrudes from the other end of the cylindrical main shaft 22 (the left end). The protruding one end of the push rod 39 is connected to a clutch actuator 18 through a clutch power transmission means 17.

A transmission 13 is a multistep transmission and includes the main shaft 22, a drive shaft 23, and a gear selection mechanism 24. The main shaft 22 is connected to the crankshaft 21 of the engine through the clutch 14. The main shaft 22 and the drive shaft 23 are disposed substantially parallel to each other.

A plurality of gears 25 are mounted on the main shaft 22. On the other hand, a plurality of gears 26 are mounted on the drive shaft 23 to correspond to the gears 25. Engagement between the plurality of gears 25 and the plurality of gears 26 is achieved only through a pair of selected gears. Among the plurality of gears 25 and 26, at least either the gears 25 except the selected gear 25 or the gears 26 except the selected gear 26 are rotatable with respect to the main shaft 22 or the drive shaft 23. In other words, at least either the unselected gears 25 or the unselected gears 26 idle with respect to the main shaft 22 or the drive shaft 23. Thus, rotation transmission between the main shaft 22 and the drive shaft 23 is achieved only through the selected gears 25 and 26 which engage with each other.

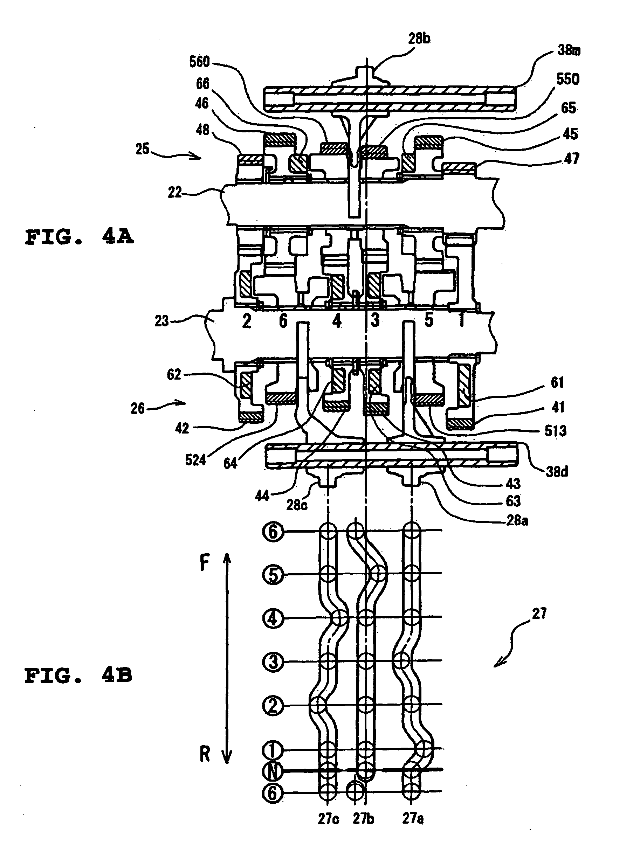

Selection of the gears 25 and 26 is performed by the gear selection mechanism 24. More specifically, as shown in FIG. 4, a shift cam 27 of the gear selection mechanism 24 performs the selection of the gears 25 and 26. Cam grooves 27a, 27b, and 27c are formed on the outer peripheral surface of the shift cam 27. Shift forks 28a, 28b, and 28c are mounted to the cam grooves 27a, 27b, and 27c, respectively. Each of the shift forks respectively engages with the gear 25 and the gear 26 to form a predetermined dog of the main shaft 22 and the drive shaft 23. When the shift cam 27 is rotated, each of the plural shift forks 28a, 28b, and 28c is guided with the cam grooves 27a, 27b, and 27c to move in the axial direction of the main shaft 22 and the drive shaft 23. Each of the plural shift forks 28a, 28b, and 28c, which are moved in the axial direction of the main shaft 22 and the drive shaft 23, engages or disengages the dog of the gears 25 and 26. This allows for selection of a fixed gear and a slide gear to engage with each other among the gears 25 and 26. More specifically, among the plural gears 25 and 26, only a pair of gears 25 and 26 positioned in accordance with a rotation angle of the shift cam 27 is fixed by a spline via the dog with respect to the main shaft 22 and the drive shaft 23. This determines a position of the gears, and through the gears 25 and 26, rotation transmission with a specified change gear ratio is performed between the main shaft 22 and the drive shaft 23.

The shift actuator 16 and the clutch actuator 18 are each connected to a control device (ECU: Electronic Control Unit) 100 to be driven by the control device 100.

Specifically, when a rider inputs a shift change command in an input device, the control device 100 starts shift control. Initially, as shown in FIG. 2, the control device 100 drives the clutch actuator 18 and disengages the clutch 14 to have a disengaged state. Next, the control device 100 drives the shift actuator 16 to cause the gear selection mechanism 24 to select the desired gears 25 and 26. Thereafter, the control device 100 drives the clutch actuator 18 again to engage the clutch 14.

The gear selection mechanism 24 is connected to a shift actuator 16 through a shift power transmission mechanism 15. This allows the shift actuator 16 to drive the gear selection mechanism 24.

Hereinafter, a state of shift change concerning the transmission 13 will be explained in detail using the drawings.

The transmission 13 is a so-called constant-mesh dog transmission. In FIGs. 4,5, and 6, a fixed gear 48 in the gear 25 is coupled to the main shaft 22. Engagement between the main shaft 22 and the fixed gear 48 is achieved, for example, by serrations provided on the main shaft 22 and the fixed gear 48. In addition, a fixed gear 47 is directly formed on the main shaft 22 as a tooth of a gear. That is, the fixed gears 47 and 48 rotate with the main shaft 22 and do not rotate relatively with respect to the main shaft 22. Moreover, slide gears 550 and 560 are fitted to the main shaft 22, and slide gears 513 and 524 are fitted to the drive shaft 23. The slide gears 550 and 560 are fitted to the main shaft 22 by serrations, and the slide gears 513 and 524 are fitted to the drive shaft 23 by serrations. That is, the slide gears 550 and 560 rotate with the main shaft 22 and do not rotate relatively with respect to the main shaft 22. The slide gears 513 and 524 rotate with the drive shaft 23 and do not rotate relatively with respect to the drive shaft 23. Moreover, a first speed gear 41, a second speed gear 42, a third speed gear 43, and a fourth speed gear 44 of the gear 26 engage with the drive shaft 23 via a bearing etc. That is, the first speed gear 41, the second speed gear 42, the third speed gear 43, and the fourth speed gear 44 idle with respect to the drive shaft 23. In addition, a fifth speed gear 45 and a sixth speed gear 46 engage with the main shaft 22 via a bearing etc. That is, the fifth speed gear 45 and the sixth speed gear 46 idle with respect to the main shaft 22. The first speed gear 41, the second speed gear 42, the third speed gear 43, the fourth speed gear 44, the fifth speed gear 45, and the sixth speed gear 46 are respectively provided with dogs 61, 62, 63, 64, 65, and 66 to obtain the spline fitted with a specified slide gear.

FIG. 4A shows a state that the transmission 13 is in a neutral position. When the transmission 13 is in the neutral position, the rotational force of the main shaft 22 is not transmitted to the drive shaft 23. In other words, the torque transmission from the main shaft 22 to the drive shaft 23 is not executed even though the gear 25 and the gear 26 are in a constant-mesh state. Reviewing meshing between the gear 25 and the gear 26 in the neutral position, the fixed gear 47 meshes with the first speed gear 41. However, as the first speed gear 41 idles with respect to the drive shaft 23, the torque transmission from the main shaft 22 to the drive shaft 23 is not executed. Moreover, the fifth speed gear 45 meshes with the slide gear 513. However, as the fifth speed gear 45 idles with respect to the main shaft 22, the torque transmission from the main shaft 22 to the drive shaft 23 is not executed. In a similar manner, in meshing between the gear 25 and the gear 26, the torque transmission from the main shaft 22 to the drive shaft 23 is not executed by the gear which idles between the main shaft 22 and the drive shaft 23.

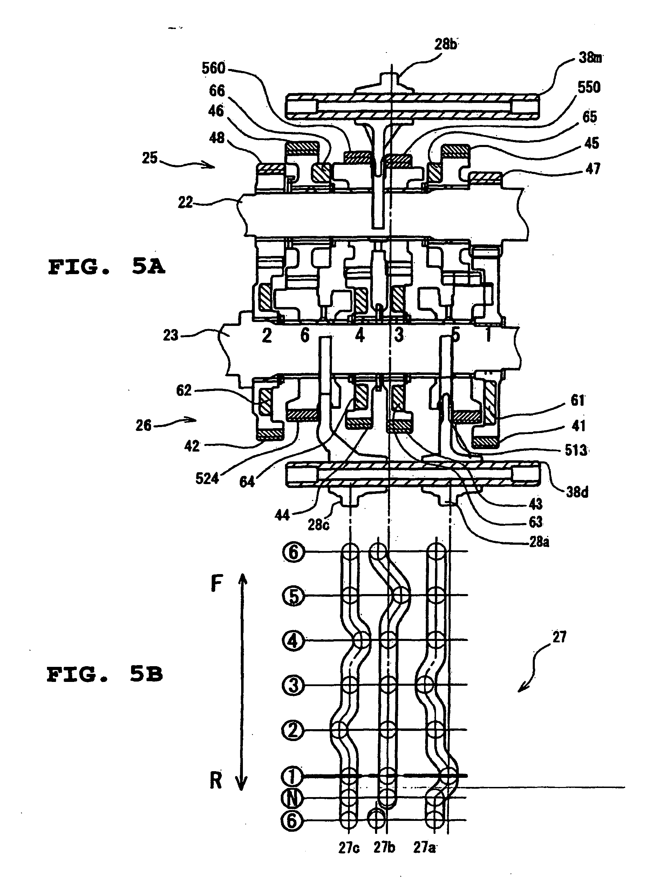

In the neutral position to the first speed upshift, the shift cam 27 rotates by a designated angle in the F direction, the shift fork 28a moves on the axial circumference of the shift cam 27 along the cam groove 27a formed on the shift cam 27. As shown in FIGs. 4A and 5A, the shift fork 28a, which moves on the axial circumference of the shift cam 27, moves on the fork shaft 38d in the axial direction, resulting that it moves on the drive shaft 23 by a designated distance in the axial direction. Since the shift fork 28a moves on the fork shaft 38d (the drive shaft 23) in the axial direction, the spline fit is achieved between the slide gear 513 and the dog 61. The slide gear 513 rotates with the drive gear 23. This allows the torque transmission from the main shaft 22 to the drive shaft 23 via the fixed gear 47 and the first speed gear 41.

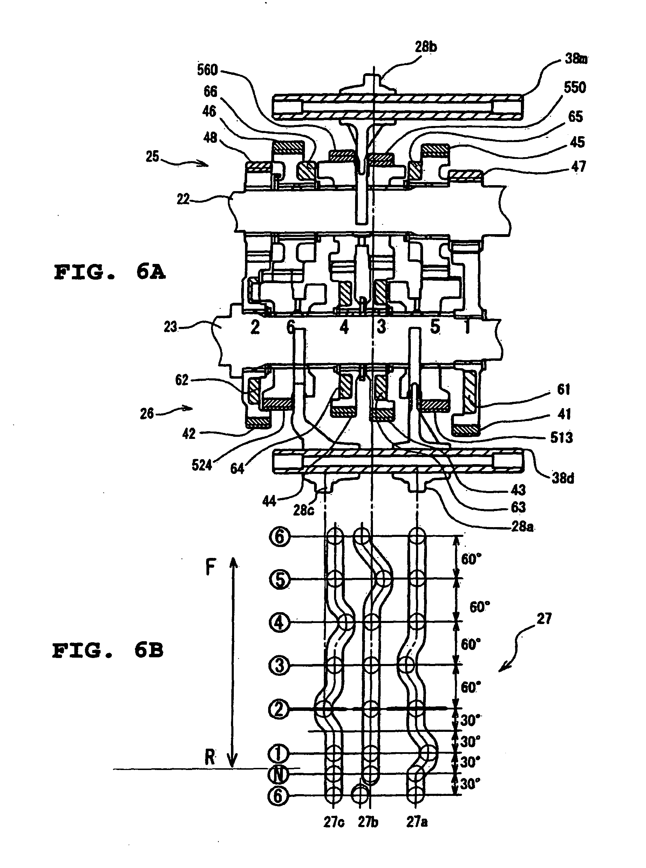

Then, as shown in FIGs. 5 and 6, in the first speed to the second speed upshift, the shift cam 27 rotates by a designated angle in the F direction, and the shift fork 28a moves on the axial circumference of the shift cam 27 along the cam groove 27a formed on the shift cam 27. As shown in FIGs. 5A and 6A, the shift fork 28a, which moves on the axial circumference of the shift cam 27, moves by a specified distance in a reverse direction with respect to a position of the first speed gear 41 in the axial direction of the drive shaft 23. This disconnects the spline fit between the slide gear 513 and the dog 61. Moreover, as shown in FIGs. 5B and 6B, the shift fork 28c moves on the axial circumference of the shift cam 27 along the cam groove 27c formed on the shift cam 27. The shift fork 28c, which moves on the axial circumference of the shift cam 27, moves on the fork shaft 38d in the axial direction, resulting that it moves on the drive shaft 23 by a specified distance in the axial direction. Since the shift fork 28c moves on the fork shaft 38d (the drive shaft 23) in the axial direction, the spline fit is achieved between the slide gear 524 and the dog 62. The slide gear 524 rotates with the drive gear 23. This allows the torque transmission from the main shaft 22 to the drive shaft 23 via the fixed gear 48 and the second speed gear 42.

As shown in FIG. 6B, each shift position from the first speed to the sixth speed provided on the cam grooves of the shift cam 27 is set for 60 degrees along the axial circumference of the shift cam 27. Moreover, a gear in/gear out operation of each shift fork in the upshift and the downshift is executed by the rotation of the shift cam 27 for 30 degrees. More specifically, when the shift fork 28a disconnects the serration fit from a position of serration fit between the slide gear 513 and the dog 61, the shift cam 27 is rotated by 30 degrees in the F direction. Thereafter, when the shift fork 28c executes serration fit between the slide gear 524 and the dog 62, the shift cam 27 rotates by 30 degrees in the F direction.

In addition, the neutral position is a position rotated from the first speed position by 30 degrees in the R direction. Since the transmission 13 is a return-type transmission, the neutral position and the sixth speed position are discontinuous. As shown in FiGs. 4B, 5B, and 6B, the cam groove 27b has a sixth speed position misaligned with the neutral position in the axial direction of the shift cam 27. A discontinuous portion of the cam groove 27b is referred to as a stopper portion for the sake of convenience. This stopper portion prevents the shift cam 27 from rotating in the F direction even when the shift actuator 16 rotates the shift cam 27 in the F direction from the sixth speed position.

However, means that prevents the shift cam 27 from rotating in the F direction from the sixth speed position even when the shift cam 27 is operated to rotate in the F direction is not limited to misalignment of the sixth speed position and the neutral position in the cam groove 27b. For example, the sixth speed position and the neutral position may be misaligned in the cam groove 27a. Moreover, the sixth speed position and the neutral position may be misaligned in the cam groove 27c.

Moreover, regulation of moving of the shift fork 28b between the neutral position and the sixth speed position is not limited to discontinuity in any of the cam grooves. For example, a barrier as a stopper member (not shown) may be provided on the shift cam 27 even when the cam grooves 27a, 27b, and 27c are continuous. In such a case, any of the shift forks is compulsory prevented from moving between the sixth speed position and the neutral position by the stopper member provided on the axis of the shift cam 27.

Moreover, regulation of moving of the shift fork 28b between the neutral position and the sixth speed position is not limited to the shape of a surface of the shift cam 27. For example, in a case where the transmission is in the neutral position, when the rider inputs a downshift command in an input device by mistake, the control device 100 may not output a drive command to the shift actuator 16 or the clutch actuator 18 and may cancel the rider's wrong command. On the other hand, in a case where the transmission is in the sixth speed position, when the rider inputs an upshift command in the input device by mistake, the control device 100 may not output a drive command to the shift actuator 16 or the clutch actuator 18 and may cancel the riders wrong command. Also, a combination of the above discussed stopper means for prevention of the rotation of the shift cam 27 between the neutral position and the highest step is possible.

Incidentally, the shift cam 27 rotates in accordance with the operation of the shift actuator 16. Hereinafter, a structure concerning the rotation of the shift cam 27 will be explained.

As shown in FIG. 2, when the shift actuator 16 is operated, the drive force of the shift actuator 16 is transmitted to a shift shaft 51 via the shift power transmission mechanism 15. The shift shaft 51 is a shaft that provides the rotational force that leads to the rotation about the axis to the shift cam 27. A shift change command from the rider allows the shift actuator 16 to execute a specified drive to rotate the shift shaft 51 in a designated direction. The designated direction varies to be opposite in the upshift change or the downshift change.

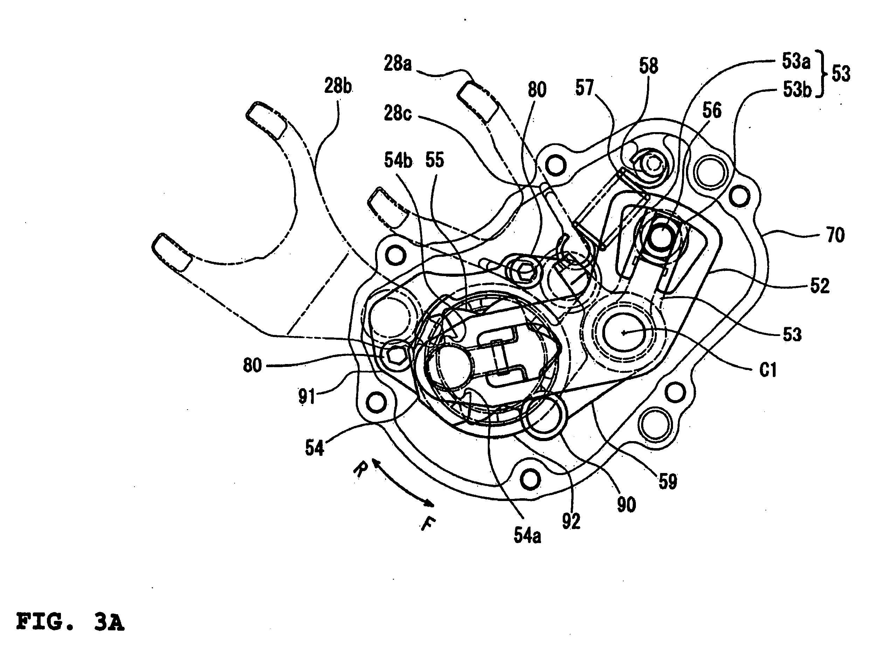

A feed device 50 is provided on one end of the shift cam 27. The feed device 50 is a mechanism that rotates the shift cam 27 at a designated angle utilizing the rotational force of the shift shaft 51 that rotates by the drive of the shift actuator 16. The feed device 50 is disposed on a case 70. In FIG. 2, the case 70 is disposed on the right end of the shift cam 27 to regulate the axial position of the shift cam 27. A plurality of holes (not shown) are formed in the case 70. Among the plural holes, the shift cam 27 passes through one hole and the shift shaft 51 passes through another hole. Due to the rotation of the shift shaft 51, a shift arm 52 is rotated. For example, in an upshift operation, as shown in FIG. 3A, the shift arm 52 rotates counterclockwise. The shift arm 52 has a center C1 of the shift shaft 51 as the rotational center. Moreover, a base 91 is a lid having a function of regulating an axial position of the shift cam 27 with respect to the shift shaft 51 etc. The base 91 is fixed in an inner portion of the case 70 by a bolt 80. Moreover, a ball bearing 92 is provided on the inner side (the left side of FIG. 2) of the base 91 and the shift cam 27 is fitted to the ball bearing 92. This allows the shift cam 27 to stably rotate about a center C2.

The rotation of the shift shaft 51 and the shift arm 52 is urged to return to a designated neutral position before rotating by a return spring 53 provided on the rear side (the left side of Fig. 2) of the shift arm 52. In other words, the return spring 53 constantly abuts to a stopper pin 56 by a left side portion 53a or a right side portion 53b and urges the shift shaft 51 and the shift arm 52 such that they return to the designated neutral position before rotating. For example, in a shift operation in the upshift, the left side portion 53a of the return spring 53 of FIG. 3A is separated from the stopper pin 56 to make a clearance. However, due to the urging force of the return spring 53, the left side portion 53a of the return spring 53 attempts to abut against the stopper pin 56, so that the shift shaft 51 and the shift arm 52 are returned to the designated neutral position before rotating.

A claw 54 is provided on one end (the left end of FIG. 3A) of the shift arm 52. The claw 54 is provided with pin holes 54a and 54b. In addition, the claw 54 and the shift arm 52 are integrally formed. The claw 54 rotates about the center C1 of the shift shaft 51 as the rotational center in accordance with the rotation of the shift arm 52. Moreover, the claw 54 rotates a segment 55 in response to the rotation of the shift arm 52.

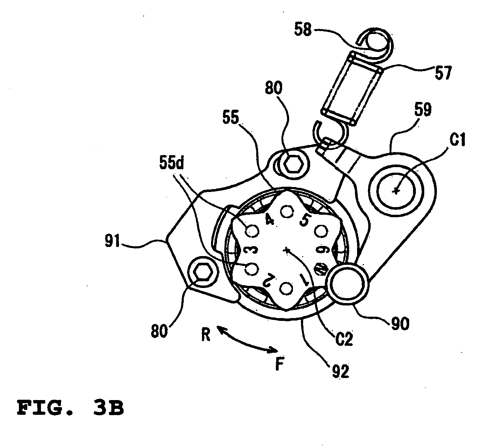

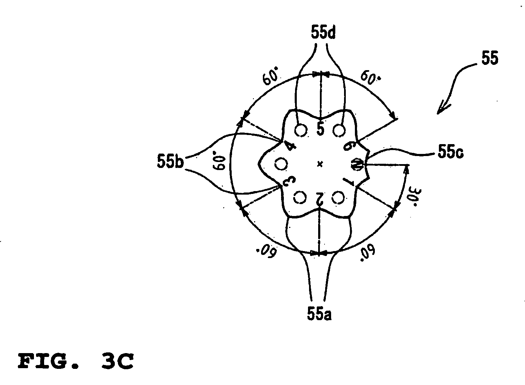

The segment 55 rotates about the center C2 of the shift cam 27 as the rotational center. The segment 55 has a plurality of pins 55d on its surface (see FIG. 3B). In this embodiment, six pins 55d are provided. When the shift shaft 51 and the shift arm 52 are positioned at the designated neutral position before rotating, two adjacent pins 55d are respectively covered by the pin hole 54a or the pin hole 54b. Here, when an upshift operation is executed in the transmission 13, in accordance with the counterclockwise rotation of the shift arm 52, the pin hole 54b holds one pin 55d to rotate the segment 55 in the counterclockwise direction. Additionally, as described later, one pin 55d is covered by the claw 54 in a position where a curved surface 55c of the claw 54 abuts to a stopper bearing 90. As shown in FIG. 3C, the segment 55 is in the shape of a star configured by superimposing two triangles. When the segment 55 is divided into projections 55a and depressions 55b in consideration of its shape, a position of each depression 55b is an enter position of each gear of the shift cam 27. In this embodiment, the transmission 13 is a six-speed transmission, and the neutral position is below the first speed position. Because of this, in the depressions 55b of the segment 55, starting from the first speed, the second speed, the third speed ... and the sixth speed are sequentially provided in the clockwise direction. The neutral position of the segment 55 is the curved surface 55c which is a projection between the sixth speed and the first speed with a height intermediate between the projection 55a and the depression 55b.

Moreover, the feed device 50 includes a stopper spring 57. The stopper spring 57 has one end supported by a pin 58 provided in the feed device 50 and the other end for supporting a stopper lever 59. For example, the stopper spring 57 is a coil spring. The stopper spring 57 is connected to the pin 58 and the stopper lever 59 in a tension state of the spring. The stopper lever 59 is provided on the back side (the left side of FIG. 2) of the shift arm 52 in FIG. 3A to rotate about the center C1 of the shift arm 52. Because of this, the stopper spring 57 allows the stopper bearing 90 to constantly abut to the segment 55 by an urging force of the spring in a compressing direction. Since the stopper bearing 90 receiving the urging force of the stopper spring 57 abuts to the segment 55, the segment 55 can stably rotate about the center C2 of the shift cam 27 in response to the operation of the claw 54.

In addition, in FIG. 2, a shift cam potentiometer 93 is provided on the opposite side of the feed device 50 across the shift cam 27. The shift cam potentiometer 93 monitors so that the rotation angle of the shift cam 27 does not exceed a designated angle provided by the control device 100.

In the embodiment, the transmission 13 preferably is a return-type electronically controlled transmission, wherein preferably the shift cam 27 can be rotated in forward and reverse directions. In the transmission 13, the neutral position is so-called bottom neutral and set below the first speed position. This allows the transmission 13 to have a clear distinction in terms of positional relationship between the neutral position and positions of other shift steps compared to a case where the neutral position is provided between the first speed and the second speed.

In addition, the neutral position of the transmission 13 is set on a rotation angle of the shift cam 27 which is different from the rotation angle of other shift steps excluding the neutral position. Because of this, also in the control by the control device 100, the shift operation to the neutral position has a clear distinction in terms of numerical values compared to other shift steps. This allows the transmission 13 to execute the shifting to the neutral position accurately. Consequently, it is possible to provide a return-type electronically controlled transmission capable of shifting to the neutral reliably.

Moreover, in the transmission 13, other shift steps excluding the neutral position are provided by a constant rotation angle of the shift cam 27. As each shift step is set for a rotation angle placed at even intervals, when a shift change is executed, the shift cam 27 can be rotated by a constant driving force compared to a case where the shift steps are not provided at even internals. In addition, regarding the control by the control device 100, the shift operation to the neutral position has a more explicit distinction in terms of numerical values compared to other shift steps. This allows the transmission 13 to execute the shifting to the neutral position easily and accurately in terms of control. Consequently, it is possible to execute a reliable shifting to the neutral position.

Moreover, the transmission 13 according to the embodiment is a six-speed transmission. In a case of the six-speed transmission, for example, compared to a transmission from the first speed to the fifth speed, a reduction ratio which is more appropriate or smaller can be obtained. Because of this, when the transmission 13 is used in an actual machine such as a vehicle, an efficient driving can be executed through an appropriate reduction ratio. Moreover, when the six-speed transmission 13 is used in the motorcycle 1 as in the embodiment, gear selection in accordance with the running state can be appropriately conducted when the motorcycle 1 is running.

Moreover, in the transmission 13, the rotation angles of the shift cam 27 from the first speed to the sixth speed are set to be 60 degrees. Because of this, a rotation angle of the shift cam 27 to each shift step is constant while the entire axial circumference of the shift cam 27 is effectively utilized. For example, when each shift step from the first speed to the sixth speed is set for 50 degrees, moving distance of the shift fork 28 during the rotation of the shift cam 27 by 50 degrees is increased compared to a case where each shift step is set for 60 degrees. This increases the driving force necessary for the rotation of the shift cam 27. As a result, the transmission 13 can be constituted as a transmission with a reduced driving force to considering extend necessary for the shift operation while utilizing the shift cam 27 effectively.

While each shift step from the first speed to the sixth speed is provided by rotation of the shift cam 27 for 60 degrees, the neutral position of the transmission 13 is set to be a position rotated by 30 degrees below the first speed or a position rotated by 30 degrees above the sixth speed. That is, the neutral position is provided at 30 degree intervals between the first speed and the sixth speed (see FIG. 3C). Moreover, a rotation angle of the shift cam 27 necessary for the shift change to each shift step is set to be half for a gear in/gear out operation. In addition, a moving distance of the shift fork 28 in the axial direction of the shift cam 27 with respect to each slide gear is set to be half for a gear in/gear out operation. In other words, the operation of each shift fork for a gear in/gear out operation is executed by the rotation of the shift cam 27 for 30 degrees. Accordingly, in a shift operation to the neutral position of the transmission 13, the moving operation of the shift fork 28a on the shift cam 27 closely resembles the moving operation of each shift fork on the shift cam 27 in a gear out operation even though the direction may be reversed in the axial direction of the shift cam 27. Consequently, it is possible to execute a reliable shifting to the neutral position.

The transmission 13 in the embodiment is so-called bottom neutral. Moreover, the transmission 13 includes stopper means that prevents the moving between the neutral position and the highest step of the shift steps. This allows for a reliable shifting to the neutral position. Moreover, the shifting to the lowest step of the shift steps can be smoothly executed in a gear in operation since the shift direction from the neutral position is limited to the lowest step of the shift steps.

Moreover, in the embodiment, the stopper means is the stopper portion configured by making the cam groove 27b discontinuous. This stopper portion avoids an additional step of providing another stopper means instead of the stopper portion in the fabrication of the shift cam 27 and the like. Consequently, the stopper means effective as described above can be easily provided. As a result, the return-type electronically controlled transmission capable of shifting to the neutral reliably can be provided.

Moreover, in the embodiment, the stopper means may be provided on the shift cam 27 as the stopper member. The stopper member is a barrier formed on the shift cam 27 so that at least one portion between the neutral position and the sixth speed is discontinuous. In such a case, it is unnecessary to secure an additional space compared to a case where another barrier instead of the stopper member is provided on a portion other than the shift cam 27. Consequently, the stopper means effective as described above can be easily provided. As a result, the return-type electronically controlled transmission capable of shifting to the neutral reliably can be provided.

Moreover, the transmission 13 in the embodiment includes the clutch actuator 18 for operating the clutch 14, the shift actuator 16 for rotating the shift cam 27, and the control device 100 for controlling the operation of the clutch actuator 18 and the shift actuator 16. Consequently, in the transmission 13, the moving between the neutral position and the highest step of the shift steps is regulated due to the control by the control device 100. As a result, the return-type electronically controlled transmission capable of shifting to the neutral reliably can be provided.

The transmission 13 according to the embodiment is provided with the motorcycle 1 which is a straddle type vehicle. The transmission 13 is the return-type electronically controlled transmission, and the so-called bottom neutral transmission where the neutral position is located below the lowest step of the shift steps. Thus, in a case where the shift change is executed when the vehicle is running, the shifting to the neutral position by mistake would not occur, while the shifting to the neutral position can be reliably executed. As a result, according to the embodiment, it is possible to provide the straddle type vehicle having the return-type electronically controlled transmission capable of shifting to the neutral reliably.

The present teaching is effective for an electronically controlled transmission and a straddle type vehicle having the same.

The description above discloses (among others) an embodiment of an electronically controlled transmission having a return-type shift pattern connected to a crank shaft of an engine via a clutch, the transmission comprising: a main shaft disposed parallel to the crank shaft for rotating in accordance with rotation of the crank shaft via the clutch; a drive shaft disposed parallel to the main shaft for rotating in accordance with rotation of the main shaft; a plurality of first gears for rotating about the center of the main shaft; a plurality of second gears for rotating about the center of the drive shaft to mesh with the plurality of first gears; a plurality of shift forks for moving any of the plurality of first gears in the axial direction of the main shaft and moving any of the plurality of second gears in the axial direction of the drive shaft; a plurality of fork shafts for supporting the plurality of shift forks; a shift cam having an axis parallel to any of the main shaft and the drive shaft and provided with a plurality of grooves that execute a designated rotation about the axis; a clutch actuator for connecting or disconnecting the clutch; a shift actuator for rotating the shift cam; and a control device for controlling the clutch actuator and the shift actuator, wherein a plurality of shift steps concerning the electronically controlled transmission are set in accordance with at least a shape of the plurality of grooves, a neutral position of the electronically controlled transmission is set below the lowest step of the shift steps, and a rotation angle of the shift cam between the neutral position and the lowest step is different from that between any adjacent shift steps.

The number of the shift steps are set by rotation angles having even intervals in the shift cam.

The number of the shift steps are set from the first speed to the sixth speed.

The number of the shift steps are set for a rotation angle of 60 degrees in the shift cam.

Preferably the neutral position is set to a position rotated by 30 degrees from the first speed of the shift steps.

Preferably, the electronically controlled transmission further comprises stopper means that prevents the shift cam from rotating between the neutral position and the highest step of the shift steps.

Further, preferably the stopper means is provided on the shift cam, and the stopper means is a stopper portion formed so that at least one portion between the neutral position and the highest step of the shift steps is discontinuous.

Further, preferably the stopper portion is a barrier that regulates moving of one of the plurality of shift forks on the shift cam.

Further, preferably the stopper means is constituted by control of the control device that executes prevention control for preventing the shift cam from rotating between the neutral position and the highest step of the shift steps.

Further, preferably the prevention control is control for the clutch actuator.

Further, preferably the prevention control is control for the shift actuator.

Preferably, an embodiment of a straddle type vehicle comprises the electronically controlled transmission according to one of the preceding embodiments.

In order to provide a return-type electronically controlled transmission capable of shifting to the neutral reliably and a straddle type vehicle having the transmission, an embodiment of a transmission 13 includes: a main shaft 22; a drive shaft 23 for rotating in accordance with rotation of the main shaft 22; a gear 25; a gear 26; a plurality of shift forks 28; a plurality of fork shafts 38; a shift cam 27 in which a plurality of grooves that execute a designated rotation about the center are formed; a clutch actuator 18; a shift actuator 16; and a control device 100 for controlling the clutch actuator 18 and the shift actuator 16. A plurality of shift steps concerning the transmission 13 are set in accordance with at least a shape of the plurality of grooves, a neutral position of the transmission 13 is set below the lowest step of the shift steps, and a rotation angle of the shift cam between the neutral position and the lowest step is different from that between any adjacent shift steps.

## Claims

1. Transmission, in particular electronically controlled transmission having a return-type shift pattern, the transmission (13) comprising:
a main shaft (22) with a plurality of first gears (25) configured to rotate about a center of the main shaft (22);
a drive shaft (23) with a plurality of second gears (26) configured to rotate about a center of the drive shaft (23) to mesh with the plurality of first gears (25);
a rotatable shift cam (27) with a plurality of grooves (27a,27b,27c) configured to select gears among the plurality of first and second gears (25,26) for torque transmission from the main shaft (22) to the drive shaft (23); and
a control device (100) configured to control rotation of the shift cam (27),
wherein a plurality of shift steps according to a first to sixth speed of the transmission (13) is set in accordance with at least a shape of the plurality of grooves (27a,27b,27c), the shift steps according to a first to sixth speed are set by rotation angles of 60 degrees having even intervals for gear in/gear out operation on the entire circumference of the shift cam (27) and
a neutral position of the transmission (13) is set below a lowest step according to the first speed of the shift steps and between said lowest step and a highest step according to the sixth speed of the shift steps.

2. Transmission according to claim 1, wherein a rotation angle of the shift cam (27) between the neutral position and the lowest step is different from that between any adjacent shift steps.

3. Transmission according to claim 1 or 2, wherein the shift cam (27) has an axis parallel to any of the axes of the main shaft (22) and the drive shaft (23).

4. Transmission according to one of claims 1 to 3, wherein a plurality of shift forks (28a,28b,28c) is configured to move any of the plurality of first gears (25) in axial direction of the main shaft (22) and to move any of the plurality of second gears (26) in axial direction of the drive shaft (23), and, preferably, a plurality of fork shafts (38d,38m) is configured to support the plurality of shift forks (28a,28b,28c).

5. Transmission according to one of claims 1 to 4, wherein a shift actuator (16) is configured to rotate the shift cam (27), and the control device (100) is configured to control the shift actuator (16).

6. Transmission according to one of claims 1 to 5, wherein the neutral position is set to a position rotated by 30 degrees from the lowest step of the shift steps.

7. Transmission according to one of claims 1 to 6, wherein a stopper means is configured to prevent the shift cam (27) from rotating between the neutral position and a highest step of the shift steps.

8. Transmission according to claim 7, wherein the stopper means comprises the shift cam (27), and, preferably, the stopper means is a stopper portion formed such that at least one portion between the neutral position and the highest step of the shift steps is discontinuous.

9. Transmission according to claim 8, wherein the stopper portion is a barrier that is configured to regulate moving of at least one of the plurality of shift forks (28a,28b,28c) on the shift cam (27).

10. Transmission according to one of claims 7 to 9, wherein the stopper means comprises the control device (100) being configured to execute prevention control for preventing the shift cam (27) from rotating between the neutral position and the highest step of the shift steps.

11. Transmission according to one of claims 1 to 10, wherein the transmission (13) comprises a clutch (14) and a clutch actuator (18) configured to connect or disconnect the clutch (14), and, preferably, the prevention control by the stopper means comprises control of the clutch actuator (18).

12. Transmission according to claim 10 or 11, wherein the prevention control by the stopper means comprises control of the shift actuator (16).

13. Straddle type vehicle comprising a transmission, in particular an electronically controlled transmission, according to one of claims 1 to 12.

## Patentansprüche

1. Getriebe, insbesondere ein elektronisch gesteuertes Getriebe mit einem Schaltmuster vom Rückführ- Typ, wobei das Getriebe (13) aufweist:
eine Hauptwelle (22) mit einer Mehrzahl von ersten Zahnrädern (25), konfiguriert, um sich um eine Mitte der Hauptwelle (22) zu drehen;
eine Antriebswelle (23) mit einer Mehrzahl von zweiten Zahnrädern (26), konfiguriert, um sich um eine Mitte der Antriebswelle (23) zu drehen, um mit der Mehrzahl von ersten Zahnrädern (25) im Kämmeingriff zu sein;
einen drehbaren Schaltnocken (27) mit einer Mehrzahl von Nuten (27a, 27b, 27c), konfiguriert, Zahnräder zwischen der Mehrzahl von ersten und zweiten Zahnrädern (25, 26) zur Drehmomentübertragung von der Hauptwelle (22) zu der Antriebswelle (23) auszuwählen; und
eine Steuervorrichtung (100), konfiguriert, die Drehung des Schaltnockens (27) zu steuern, wobei eine Mehrzahl von Schaltstufen entsprechend eines ersten bis sechsten Ganges des Getriebes (13) in Übereinstimmung mit zumindest einer Form der Mehrzahl von Nuten (27a, 27b, 27c) festgelegt ist, wobei die Schaltstufen entsprechend eines ersten bis sechsten Ganges festgelegt werden durch Drehwinkel von 60 Grad, die gleiche Intervalle für eine Zahnradeinrück- / Zahnradausrück- Operation auf dem gesamten Umfang des Schaltnockens (27) haben und
eine neutrale Position des Getriebes (13) festgelegt ist unter einer niedrigsten Stufe entsprechend des ersten Ganges der Schaltstufen und zwischen der untersten Stufe und einer höchsten Stufe entsprechend des sechsten Ganges der Schaltstufen.

2. Getriebe nach Anspruch 1, wobei ein Drehwinkel des Schaltnockens (27) zwischen der neutralen Position und der untersten Stufe von denjenigen zwischen allen benachbarten Schaltstufen verschieden ist.

3. Getriebe nach Anspruch 1 oder 2, wobei der Schaltnocken (27) eine Achse parallel zu einer der Achsen der Hauptwelle (22) oder der Antriebswelle (23) hat.

4. Getriebe nach einem der Ansprüche 1 bis 3, wobei eine Mehrzahl von Schaltgabeln (28a, 28b, 28c) konfiguriert ist, eines der Mehrzahl von ersten Zahnrädern (25) in axialer Richtung der Hauptwelle (22) zu bewegen und eines der Mehrzahl von zweiten Zahnrädern (26) in axialer Richtung der Antriebswelle (23) zu bewegen und vorzugsweise eine Mehrzahl von Gabelwellen (38d, 38m) konfiguriert ist, die Mehrzahl von Schaltgabeln (28a, 28b, 28c) zu lagern.

5. Getriebe nach einem der Ansprüche 1 bis 4, wobei ein Schaltbetätiger (16) konfiguriert ist, den Schaltnocken (27) zu drehen und die Steuereinrichtung (100) konfiguriert ist, den Schaltbetätiger (16) zu steuern.

6. Getriebe nach einem der Ansprüche 1 bis 5, wobei die neutrale Position festgelegt ist auf eine Position, gedreht um 30 Grad von der niedrigsten Stufe der Schaltstufen.

7. Getriebe nach einem der Ansprüche 1 bis 6, wobei eine Stoppereinrichtung konfiguriert ist, den Schaltnocken (27) am Drehen zwischen der neutralen Position und einer höchsten Stufe der Schaltstufen zu hindern.

8. Getriebe nach Anspruch 7, wobei die Stoppereinrichtung aufweist den Schaltnocken (27) und vorzugsweise die Stoppereinrichtung ein Stopperabschnitt ist, derart gebildet, dass zumindest ein Abschnitt zwischen der neutralen Position und der höchsten Stufe der Schaltstufen diskontinuierlich ist.

9. Getriebe nach Anspruch 8, wobei der Stopperabschnitt eine Barriere ist, die konfiguriert ist, das Bewegen von zumindest einer von der Mehrzahl der Schaltgabeln (28a, 28b, 28c) auf dem Schaltnocken (27) zu regeln.

10. Getriebe nach einem der Ansprüche 7 bis 9, wobei die Stoppereinrichtung die Steuervorrichtung (100) aufweist, die konfiguriert ist, eine Verhinderungssteuerung auszuführen, um den Schaltnocken (27) am Drehen zwischen der neutralen Position und der höchsten Stufe der Schaltstufen zu hindern.

11. Getriebe nach einem der Ansprüche 7 bis 10, wobei das Getriebe (13) eine Kupplung (14) und einen Kupplungsbetätiger (18) aufweist, konfiguriert, die Kupplung (14) zu verbinden oder zu trennen, und vorzugsweise die Verhinderungssteuerung durch die Stoppereinrichtung die Steuerung des Kupplungsbetätigers (18) aufweist.

12. Getriebe nach Anspruch 10 oder 11, wobei die Verhinderungssteuerung durch die Stoppereinrichtung die Steuerung des Schaltbetätigers (16) aufweist.

13. Fahrzeug vom Spreizsitz- Typ, aufweisend ein Getriebe, insbesondere ein elektronisch gesteuertes Getriebe nach einem der Ansprüche 1 bis 12.

## Revendications

1. Transmission, en particulier transmission commandée électroniquement ayant un mode de changement de rapports de type à retour, la transmission (13) comprenant:
un arbre principal (22) avec une pluralité de premiers engrenages (25) configurés pour tourner autour d'un centre de l'arbre principal (22) ;
un arbre d'entraînement (23) avec une pluralité de seconds engrenages (26) configuré pour tourner autour d'un centre de l'arbre d'entraînement (23) pour s'engrener avec la pluralité de premiers engrenages (25) ;
une came d'arbre rotative (27) avec une pluralité de gorges (27a, 27b, 27c) configurées pour sélectionner des engrenages dans la pluralité de premiers et secondes engrenages (25, 26) pour une transmission de couple de l'arbre principal (22) à l'arbre d'entraînement (23) ; et
un dispositif de commande (100) configuré pour commander la rotation de la came d'arbre (27), où une pluralité de pas de changement de rapports selon des première à sixième vitesses de la transmission (13) est établie en conformité avec au moins une forme de la pluralité de gorges (27a, 27b, 27c), les pas de changement de rapports selon des première à sixième vitesses étant établis par des angles de rotation de 60 degrés ayant des intervalles réguliers pour une opération d'entrée/de sortie d'engrenage sur toute la circonférence de la came d'arbre (27) et
une position neutre de la transmission (13) est établie sous un pas le plus bas selon la première vitesse des pas de changement de rapports et entre ledit pas le plus bas et un pas le plus haut selon la sixième vitesse des pas de changement de rapports.

2. Transmission selon la revendication 1, dans laquelle un angle de rotation de la came d'arbre (27) entre la position neutre et le pas le plus bas est différent de celui entre les pas de changement de rapports adjacents quelconques.

3. Transmission selon la revendication 1 ou 2, dans laquelle la came d'arbre (27) présente un axe parallèle à l'un quelconque des axes de l'arbre principal (22) et de l'arbre d'entraînement (23).

4. Transmission selon l'une des revendications 1 à 3, dans laquelle une pluralité de fourchettes de boîte (28a, 28b, 28c) est configurée pour déplacer l'un quelconque de la pluralité de premiers engrenages (25) dans une direction axiale de l'arbre principal (22) et pour déplacer l'un quelconque de la pluralité de second engrenages (26) dans une direction axiale de l'arbre d'entraînement (23), et, de préférence, une pluralité d'arbres de fourchette (38d, 38m) est configurée pour supporter la pluralité de fourchettes de boîte (28a, 28b, 28c).

5. Transmission selon l'une des revendications 1 à 4, dans laquelle un actionneur de changement de rapports (16) est configuré pour faire tourner la came d'arbre (27), et le dispositif de commande (100) est configuré pour commander l'actionneur de changement de rapports (16).

6. Transmission selon l'une des revendications 1 à 5, dans laquelle la position neutre est établie à une position tournée de 30 degrés par rapport au pas le plus bas des pas de changement de rapports.

7. Transmission selon l'une des revendications 1 à 6, dans laquelle un moyen de butée est configuré pour empêcher la came d'arbre (27) de tourner entre la position neutre et un pas le plus élevé des pas de changement de rapports.

8. Transmission selon la revendication 7, dans laquelle le moyen de butée comprend la came d'arbre (27) et, de préférence, le moyen de butée est une portion de butée formée de sorte qu'au moins une portion entre la position neutre et le pas le plus élevé des pas de changement de rapports est discontinue.

9. Transmission selon la revendication 8, dans laquelle la portion de butée est une barrière qui est configurée pour réguler le déplacement d'au moins une fourchette de la pluralité de fourchettes de boîte (28a, 28b, 28c) sur la came d'arbre (27).

10. Transmission selon l'une des revendications 7 à 9, dans laquelle le moyen de butée comprend le dispositif de commande (100) configuré pour exécuter une commande d'empêchement afin d'empêcher la came d'arbre (27) de tourner entre la position neutre et le pas le plus élevé des pas de changement de rapports.

11. Transmission selon l'une des revendications 1 à 10, dans laquelle la transmission (13) comprend un embrayage (14) et un actionneur d'embrayage (18) configuré pour raccorder ou déconnecter l'embrayage (14), et, de préférence, la commande d'empêchement par le moyen de butée comprend la commande de l'actionneur d'embrayage (18).

12. Transmission selon la revendication 10 ou 11, dans laquelle la commande d'empêchement par le moyen de butée comprend la commande de l'actionneur de changement de rapports (16).

13. Véhicule de type à selle comprenant une transmission, en particulier une transmission commandée électroniquement, selon l'une des revendications 1 à 12.
